# EUROPÄISCHE PATENTSCHRIFT

(11) **EP 1 582 433 B1**
(45) Veröffentlichungstag und Bekanntmachung des Hinweises auf die Patenterteilung: **25.07.2007**
(21) Anmeldenummer: 05006970.7
(22) Anmeldetag: 31.03.2005
(51) Int. Cl.: B62B 7/02, B62B 5/06

(54) **Einrad mit Gurtvorrichtung für den fussgängerischen Transport eines Kindes**
Unicycle with belt device for the transport of a child by a pedestrian
Unicycle muni d'une ceinture pour le transport d'un enfant par un piéton

(30) Priorität: 02.04.2004 DE 102004016258
(43) Veröffentlichungstag der Anmeldung: 05.10.2005
(73) Patentinhaber: Radermacher, Horst, 52159 Roetgen (DE)
(72) Erfinder: Radermacher, Horst, 52159 Roetgen (DE)
(74) Vertreter: Bauer, Dirk

(56) Entgegenhaltungen:
- EP-A- 1 018 462
- GB-A- 2 245 871
- US-A- 4 664 395
- US-A- 5 511 802
- PATENT ABSTRACTS OF JAPAN Bd. 001, Nr. 105 (M-036), 16. September 1977 (1977-09-16) & JP 52 044932 A (GOOLE:KK), 8. April 1977 (1977-04-08)

## Beschreibung

Die Erfindung betrifft ein Einrad mit Gunvorrichtung, für den Transport eines Kindes, von einer Person schieb- und lenkbar und über die Gurtvorrichtung an die Person koppelbar, aufweisend einen Kindersitz, eine Stange, daran befestigt ein Rad und ein Lenker.

Ein derartiges Einrad ist unter anderem für den Kindertransport durch größere Menschenansammlungen wie zum Beispiel auf Weihnachtsmärkten, Jahrmärkten oder Rummelplätzen vorteilhaft, da die Verwendung eines herkömmlichen Kinderwagens wegen Platzmangels nur eingeschränkt möglich ist und Rücken- oder Bauchtragevorrichtungen oftmals als unkomfortabel empfunden werden. Außerdem ermöglichen derartige Einräder, dass Kinder, deren Kondition und Ausdauer noch nicht voll entwickelt ist, auf größeren Wanderungen auch auf eher schlechten Wegen mitgenommen werden können.

Derartige Einräder - allerdings ohne Gurtvorrichtung - sind aus der DE 85 27 278 U1 und der DE 91 03 909 U1 bekannt und sind im wesentlichen gekennzeichnet durch eine Verbindungsstange zwischen einem Rad und einem Lenker sowie einem Kindersitz.

Die EP 1 018 462 A1 offenbart eine einrädrige Kinder-Beförderungseinrichtung für unebenes Gelände, die im wesentlichen dadurch gekennzeichnet ist, dass ein Fahrrad-Rad und ein hochklappbares kleines Stützrad zur Stabilisierung vorgesehen sind. Nachteilig ist hier, dass das Gewicht der Beförderungseinrichtung und des auf ihr beförderten Kindes bei hochgeklapptem Stützrad vollständig auf dem Fahrrad-Rad und den Händen der schiebenden Person lastet, was rasch zu Ermüdungen führt. Bei ausgeklapptem Stützrad wird diese ungünstige Gewichtsverlagerung reduziert, dabei jedoch die Geländegängigkeit eingeschränkt. Außerdem behindert das Stützrad durch seine Positionierung in Richtung der schiebenden Person diese beim Gehen.

Ein Nachteil der bekannten Einräder besteht schließlich allgemein darin, dass - bedingt durch die grundsätzlich gegebene Instabilität durch nur ein Rad - ein im Betrag variabler Anteil der Schwerkraft von Einrad und Kind ständig und mit erhöhter Aufmerksamkeit aufgefangen und korrigiert werden muss. Im Versuch diesen Effekt abzuschwächen, wird bei den bestehenden Einrädern der Schwerpunkt des Einrades mit dem darauf sitzenden Kind tiefer gelegt, indem man die Sitzhöhe des Einradsitzes reduziert und somit die Lenkstange das höchstgelegene Bauteil darstellt. Dieses Vorgehen führt aber, ohne den vorher erwähnten Effekt vollständig lösen zu können, dazu, dass die Sicht des Kindes vor allem in oben genannten Menschenansammlungen gemindert wird, da sich das Kind mit seiner Sichthöhe etwa auf der Günelhöhe von Erwachsenen befindet, was beim Kind möglicherweise zu Engegefühl und Unwohlsein führen kann.

Schließlich offenbart die US 5 511 802 A noch einen einrädrigen Sitz-Kinderwagen mit dementsprechend ebenfalls niedriger Sitzhöhe des Kindes. Das Gesamtgewicht von Kinderwagen und Kind liegt hier auf dem Rad und auf den Hüften der schiebenden Person. Das wird dadurch erreicht, dass das Chassis des Kinderwagens im oberen Bereich mit einer Stange über einen gummiartigen Schockabsorber relativ starr mit einer Platte verbunden ist, die beim Schieben auf dem Bauchbereich der Person aufliegt und die schließlich mit einem Hüftgurt verbunden ist, den die schiebende Person beim Schieben des Wagens anzulegen hat. Die Hände der Person bleiben dabei in der Regel frei, jedoch ist noch ein Griff vorgesehen mit dessen Hilfe der Wagen in besonders engen Kurven gelenkt werden soll. Ein Nachteil ist hier, dass Stöße auf das Rad, nur wenig abgeschwächt durch die Einleitung in den Schockabsorber und die Verteilung auf die Platte, direkt auf den Bauch der Person einwirken, was unter Umständen zu gesundheitlichen Beeinträchtigungen führen kann.

Aus der DE 74 20 956 U1 ist schließlich eine tragbare Kinderkarre bekannt, so dass bei Ermüdung der schiebenden Person Karre und Kind getragen werden können bzw. müssen.

Der Erfindung liegt somit die Aufgabe zugrunde, den sicheren, stabilen und für die schiebende Person ermüdungsarmen und gefahrlosen Transport eines Kindes mit einem Einrad zu ermöglichen.

Ausgehend von einem Einrad der oben beschriebenen Art wird diese Aufgabe erfindungsgemäß dadurch gelöst, dass ein Halteseil von der Gurtvorrichtung zu einem radnahen Befestigungspunkt verläuft.

Bei der Benutzung des Einrades mit Gurtvorrichtung fällt das Einrad aus einer vertikalen Position in eine leichte Schräglage, indem das Rad sich von der schiebenden Person in gerader Richtung fortbewegt und die Lenkung von der Person festgehalten wird, bis das Halteseil gespannt ist und dadurch die Schräglage des Einrades begrenzt. Durch das gespannte Halteseil lässt sich eine Stabilisierung des Einrad-Fahrverhaltens in Fahrtrichtung erzielen, indem ein Teil der der Schwerkraft entgegenwirkenden Kraft nicht mehr von den Händen der Person aufgebracht wird, sondern von der Gurtvorrichtung, an der das Halteseil befestigt wird. Der Kindertransport mit dem Einrad wird dadurch sicherer für das Kind und leichter für die das Einrad schiebende Person.

Nach einer Ausgestaltung der Erfindung ist das Halteseil am unteren Ende der Stange ankoppelbar, um so - bezogen auf den Schwerpunkt - einen möglichst großen Hebelarm, d.h. ein möglichst hohes Moment in das Einrad einzuleiten.

Eine weitere Ausgestaltung besteht darin, dass das Halteseil in seiner Länge und/oder seinem Befestigungspunkt an der Stange verstellbar ist, so dass es an verschieden große Personen angepasst werden kann.

Eine Erfindungsweiterbildung besteht in einem Sicherungsseil, welches zwischen der Gurtvonichtung und dem Kindersitz oder einer Rückhalteeinrichtung für das im Kindersitz befindliche Kind befestigbar ist. Bei einem eventuellen Sturz des Einrades und insbesondere auch dann, wenn das Rad zwischen den Beinen der Person hindurch nach hinten wegrollt, kann so, bei genügend kurzer Länge des Seils, das Kind aufgefangen und dadurch Verletzungen des Kindes verhindert werden.

Eine weitere Ausgestaltung der Erfindung besteht darin, dass die Gurtvorrichtung aus zwei Schultergurten und einem Bauch- oder Hüftgurt besteht, die miteinander verbunden sind, wobei der Bauch- oder Hüftgurt ein Element zur Aufnahme des Halteseiles und des Sicherungsseiles besitzt. Dadurch wird die auf das Befestigungselement einwirkende Kraft verteilt auf die Hüfte und die Schultern der das Einrad schiebenden Person.

Des weiteren wird die Erfindung dadurch weitergebildet, dass sich die Sitzfläche des Kindersitzes auf einem Niveau mit dem Lenker oder höher als dieser befindet. Dadurch erhält das Kind eine verbesserte Sicht und wird - große Menschenansammlungen vorausgesetzt - weit weniger ein Engegefühl verspüren als bei bekannten Einrädern.

Die Erfindung wird nachfolgend anhand eines Ausführungsbeispiels eines Kinder-Einrades mit Gurtzeug näher erläuteit Es zeigt:
Fig. 1 die Frontansicht eines Einrades in schematischer Darstellung,
Fig. 2 eine Seitenansicht des in Fig. 1 dargestellten Einrades in schematischer Darstellung,
Fig. 3 eine Seitenansicht des in Fig. 1 dargestellten Einrades und einer eine Gurtvorrichtung tragende Person, eine Grundposition einnehmend, in schematischer Darstellung.
Fig. 4 eine Seitenansicht des in Fig. 1 dargestellten nach vom gekippten Einrades und der Person in schematischer Darstellung.

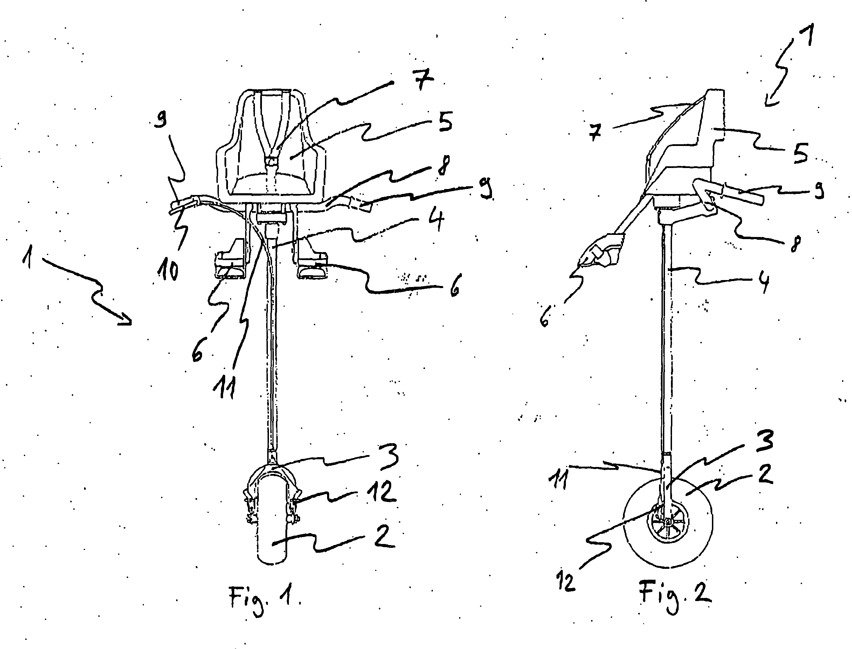

Das in Fig. 1 und Fig. 2 dargestellte Einrad 1 zum Transport eines Kindes weist ein Rad 2 in Form eines Sackkarrenrades mit Luftbereifung auf, welches mit einer Gabel 3 an seinen beiden Achsenden verschraubt ist. Die Gabel 3 ist mit dem einen Ende einer Stange 4 verschweißt, deren anderes Ende mit einen Kindersitz 5 in Form eines Fahrradkindersitzes mit Fußstützen 6 und einer Rückhalteeinrichtung 7 in Form eines Sitzgurtes verbunden ist. An der Stange 5 ist zudem ein Lenker 8 höhenverstellbar verschraubt. An dem Lenker 8 befinden sich zwei Lenkergriffe 9 sowie ein Bremshebel 10 mit dem über ein Bremsseil 11 eine Bremse 12 betätigt werden kann.

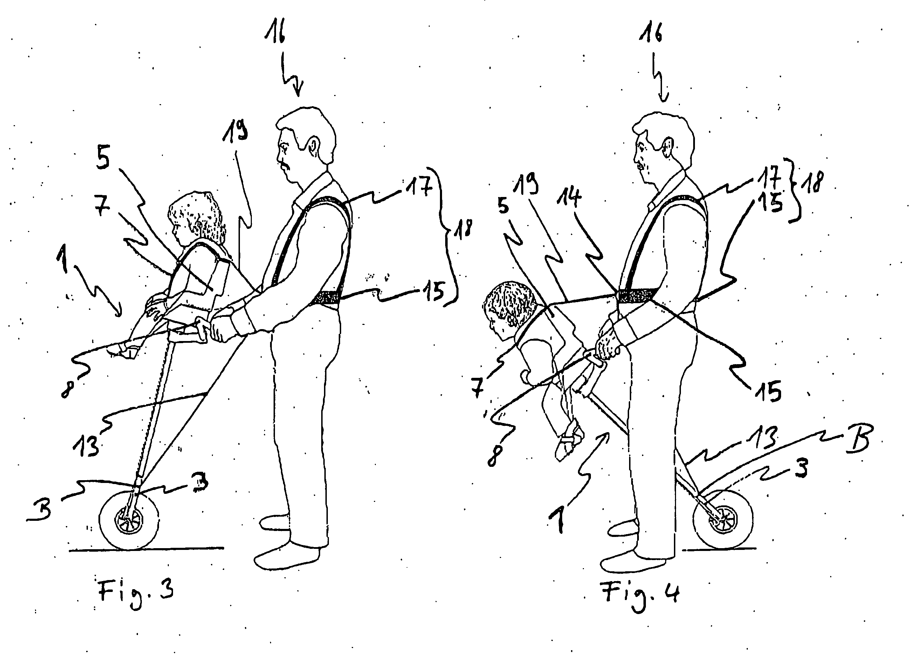

Wie sich aus der Seitenansicht gemäß Fig. 3 und Fig. 4 ergibt, wird durch die Befestigung eines in seiner Länge durch eine handelsübliche Klemme verstellbaren Halteseiles 13 zwischen einem Befestigungspunkt B, der im Ausführungsbeispiel an der Gabel 3 liegt, und einem Befestigungselement 14 in Form einer Öse, die an einem Bauch- oder Hüftgurt 15 angeschlagen ist, eine stabile leichte Schräglage des Einrades 1 ermöglicht, ohne dass die das Einrad 1 schiebende Person 16, die den Bauch- oder Hüftgurt 15 angelegt hat, das sonst anfallende Teilgewicht des Einrades 1 mit dem Kind allein über den Lenker 8, die Arme und die Schultern zu balancieren hätte. Die Schräglage des Einrades 1 wird durch Variation der Länge des gespannten Halteseils 13 verstellt, so dass die nötige Beinfreiheit der Person 16 bei schnellerer Gangart hinreichend berücksichtigt wird.

Der Bauch- oder Hüftgurt 15 ist mit zwei Schultergurten 17, die hosenträgerartig von der Bauchseite des Bauch- oder Hüftgurtes 15 über die Schultern zur Rückenseite des Bauch-oder Hüftgurtes 15 geführt werden, zu einer Gurtvorrichtung 18 verbunden, um die auf das Befestigungselement 14 einwirkende Kraft möglichst gleichmäßig auf mehrere Körpetpartien (Schultern, Rücken, Hüfte) zu verteilen..

Das Einrad 1 wird von der Person 16 beidhändig über den Lenker 8 gesteuert, wobei das Einrad 1 von der Person 16 möglichst gerade in Fahrtrichtung zu halten ist. Durch eine Bewegung des Lenkers 8 von der Person 16 weg, wird die Schräglage des Einrades 1 reduziert, da das Halteseil 13 die sonst resultierende Vorwärtsbewegung des Rades 3 verhindert. Dadurch lassen sich beliebig enge Radien mit dem Einrad 1 komfortabel von der Person 12 steuern, so dass auch innerhalb großer Menschenansammlungen bequem größere Strecken zurückgelegt werden können.

Durch die Befestigung eines geeignet kurzen Sicherungsseiles 19 zwischen dem Befestigungselement 14 der Gurtvozzichtung 18 und einem weiteren Befestigungselement - das hier nicht gezeigt ist - an der Rückhalteeinrichtung 7 des Kindersitzes 5 oder am Kindersitz 5 selbst, können Verletzungen des Kindes bei unvorhergesehenem Kippen des Einrades 1 durch ein Wegrollen zwischen den Beinen der Person 16, wie in Fig. 4 dargestellt, ausgeschlossen werden, da das Sicherungsseill 9 in Verbindung mit dem Halteseil 13 das Einrad in einer stabilen Position auffängt und halt.

## Patentansprüche

1. Einrad (1) mit Gurtvorrichtung (18), für den Transport eines Kindes, von einer Person (16) schieb- und lenkbar und über die Gurtvorrichtung (18) an die Person koppelbar, aufweisend einen Kindersitz (5), eine Stange (4), daran befestigt ein Rad (2) und ein Lenker (8), **gekennzeichnet durch** ein Halteseil (13), das von der Gurtvorrichtung (18) zu einem radnahen Befestigungspunkt (B) verläuft.

2. Einrad (1) mit Gurtvorrichtung (18), nach Anspruch 1, **dadurch gekennzeichnet, dass** das Halteseil (13) am unteren Ende der Stange (4) ankoppelbar ist.

3. Einrad (1) mit Gurtvorrichtung (18), nach mindestens einem der vorhergehenden Ansprüche, **dadurch gekennzeichnet, dass** das Halteseil (13) in seiner Länge und/oder seinem Befestigungspunkt an der Stange (4) verstellbar ist.

4. Einrad (1) mit Gurtvorrichtung (18), nach mindestens einem der vorhergehenden Ansprüche, **gekennzeichnet durch** ein Sicherungsseil (19) welches zwischen der Gurtvorrichtung (18) und dem Kindersitz (5) oder einer Rückhalteeinrichtung (7) für das im Kindersitz (5) befindliche Kind befestigbar ist.

5. Einrad (1) mit Gurtvorrichtung (18), nach Anspruch 4, **dadurch gekennzeichnet, dass** die Gurtvorrichtung (18) aus zwei Schultergurten (17) und einem Bauch- oder Hüftgurt (15) besteht, die miteinander verbunden sind, wobei der Bauch- oder Hüftgurt (15) ein Befestigungselement (14) zur Aufnahme des Halteseiles (13) und/oder des Sicherungsseiles (19) besitzt

6. Einrad (1) mit Gurtvorrichtung (18), nach mindestens einem der vorhergehenden Ansprüche, **dadurch gekennzeichnet, dass** sich die Sitzfläche des Kindersitzes (5) auf dem Niveau des Lenkers (8) oder höher als dieser befindet.

## Claims

1. A unicycle (1) with belt apparatus (18) for the transport of a child, which unicycle can be pushed and steered by a person (16) and can be coupled to the person by means of the belt apparatus (18), comprising a children's seat (5), a bar (4), a wheel (2) fastened thereto and a handlebar (8), **characterized by** a holding cable (13) which extends from the belt apparatus (18) to a fastening point (B) close to the wheel.

2. A unicycle (1) with a belt apparatus (18) in accordance with claim 1, **characterized in that** the holding cable (13) can be coupled to the bottom end of the bar (4).

3. A unicycle (1) with a belt apparatus (18) in accordance with at least one of the preceding claims, **characterized in that** the holding cable (13) is adjustable in its length and/or its fastening point on the bar (4).

4. A unicycle (1) with a belt apparatus (18) in accordance with at least one of the preceding claims, **characterized by** a securing cable (19) which can be fastened between the belt apparatus (18) and the children's seat (5) or a harness device (7) for the child situated in the children's seat (5).

5. A unicycle (1) with a belt apparatus (18) in accordance with claim 4, **characterized in that** the belt apparatus (18) consists of two shoulder straps (17) and a waist strap (15) which are joined to each other, with the waist strap (15) comprising a fastening element (14) for receiving the holding cable (13) and/or the securing cable (19).

6. A unicycle (1) with belt apparatus (18) in accordance with at least one of the preceding claims, **characterized in that** the seat surface of the children's seat (5) is situated at the level of the handlebar (8) or higher than the same.

## Revendications

1. Unicycle (1) muni d'une ceinture (18) pour le transport d'un enfant, qui peut être poussé et dirigé par une personne (16) et qui peut être attaché à la personne par la ceinture (18), comportant un siège pour enfant (5), une barre (4), une roue (2) fixée à celle-ci et un guidon (8), **caractérisé en ce qu'**il possède un câble de maintien (13) qui va de la ceinture (18) à un point de fixation (B) proche de la roue.

2. Unicycle (1) muni d'une ceinture (18) selon la revendication 1, **caractérisé en ce que** le câble de maintien (13) peut être attaché à l'extrémité inférieure de la barre (4).

3. Unicycle (1) muni d'une ceinture (18) selon l'une au moins des revendications précédentes, **caractérisé en ce que** la longueur du câble de maintien (13) et/ou son point de fixation sur la barre (4) sont modifiables.

4. Unicycle (1) muni d'une ceinture (18) selon l'une au moins des revendications précédentes, **caractérisé en ce qu'**il comporte un câble de sécurité (19) qui est fixé entre la ceinture (18) et le siège pour enfant (5) ou un dispositif de maintien (7) pour l'enfant qui se trouve dans le siège pour enfant (5).

5. Unicycle (1) muni d'une ceinture (18) selon la revendication 4, **caractérisé en ce que** la ceinture (18) se compose de deux sangles d'épaule (17) et d'une sangle de taille ou de hanches (15) qui sont reliées entre elles, la sangle de taille ou de hanches (15) possédant un élément de fixation (14) destiné à recevoir le câble de maintien (13) et/ou le câble de sécurité (19).

6. Unicycle (1) muni d'une ceinture (18) selon l'une au moins des revendications précédentes, **caractérisé en ce que** la surface d'assise du siège pour enfant (5) se trouve au niveau du guidon (8) ou plus haut que celui-ci,
